# EUROPEAN PATENT APPLICATION

(11) **EP 4 789 860 A1**
(43) Date of publication of application: **12.08.2026**
(21) Application number: 24874560.6
(22) Date of filing: 27.09.2024
(51) Int. Cl.: B30B 5/02, B28B 3/00, B28B 7/34, B30B 11/00, B30B 15/30, C04B 35/587

(54) **FILLING METHOD OF CERAMIC MOLDED BODY, METHOD FOR MANUFACTURING CIP BODY, METHOD FOR MANUFACTURING CERAMIC SINTERED BODY, AND METHOD FOR MANUFACTURING MATERIAL FOR CERAMIC BALL**

(30) Priority: 06.10.2023 JP 2023173969
(71) Applicant: Niterra Materials Co., Ltd., Yokohama-shi, Kanagawa 235-0032 (JP)
(72) Inventor: MAKINO, Keisuke, Yokohama-shi, Kanagawa 235-0032 (JP); ICHIKAWA, Hiroshi, Yokohama-shi, Kanagawa 235-0032 (JP); AKIMOTO, Toshiya, Yokohama-shi, Kanagawa 235-0032 (JP); AKIYA, Suguru, Yokohama-shi, Kanagawa 235-0032 (JP); NISHIGAKI, Hisashi, Yokohama-shi, Kanagawa 235-0032 (JP)
(74) Representative: Hoffmann Eitle
(86) International application number: PCT/JP2024/034767
(87) International publication number: WO 2025/074956

(57) **Abstract**

A method for inserting ceramic green compacts into multiple hole portions formed in a CIP rubber mold according to an embodiment includes an insertion step. The ceramic green compacts are multiple pretreated green compacts before being subjected to a CIP process each having a maximum diameter of 5.0 mm or greater. The insertion step inserts the multiple pretreated green compacts respectively into the multiple hole portions using suction-based transport.

## Description

### TECHNICAL FIELD

An embodiment of the present invention relates to a method for inserting ceramic green compacts, a method for producing CIP green compacts, a method for producing sintered ceramic compacts, and a method for producing a ceramic ball material.

### BACKGROUND ART

Various ceramic materials have properties, such as high hardness, an insulation property, and wear resistance. In particular, fine ceramics, which have enhanced purity and a uniform particle size, exhibit properties suitable for applications in various fields, such as capacitors, actuator materials, and refractory materials. Products formed by utilizing wear resistance and an insulation property among such properties are applicable to balls. Examples of ball applications include bearings, jigs, tools, gauges, solenoid valves, check valves, and various other valves. Among these, for bearing applications, materials, such as aluminum oxide, silicon nitride, and zirconium oxide, are used (see Patent Documents 1 to 3). For example, Patent Documents 1 and 2 each disclose a bearing ball formed with a silicon nitride material, and Patent Document 3 discloses a bearing ball formed with a zirconium oxide material.

In a process for producing such bearing ball materials, a method of sintering ceramic green compacts (sometimes referred to simply as "green compacts") is used. In addition, press molding that involves the use of a die is used as a molding method. Press molding is typically a method that includes inserting a gap between an upper punch and a lower punch with powder, and applying pressure to the powder to obtain a pretreated green compact as a green compact before being subjected to a CIP process. Since such a pretreated green compact is formed by applying a uniaxial load to powder from above and below, a method for obtaining a homogeneous pretreated green compact is performed by further applying pressure from all directions using cold isostatic pressing (CIP) (Patent Document 4). According to Patent Document 4, during press molding, a gap needs to be provided between a tip portion of an upper punch and a tip portion of a lower punch to protect the die. This results in the formation of a spherical portion and a band-shaped portion in the pretreated green compact. Thus, a bearing ball material obtained by sintering such a pretreated green compact also has a spherical portion and a band-shaped portion formed therein.

### PRIOR ART DOCUMENTS

### PATENT DOCUMENT

| | |
|---|---|
| Patent Document 1: | Japanese Patent Laid-Open No. 6-48813 |
| Patent Document 2: | Japanese Patent No. 2764589 |
| Patent Document 3: | Japanese Patent Laid-Open No. 60-18620 |
| Patent Document 4: | International Publication No. WO 2023/003040 |

### SUMMARY OF THE INVENTION

### PROBLEMS TO BE SOLVED BY THE INVENTION

By filling multiple hole portions formed in a CIP rubber mold (sometimes referred to simply as a "rubber mold") with multiple pretreated green compacts, and applying isotropic hydraulic pressure to a rubber mold stacked product (i.e., a stack of multiple rubber molds), it is possible to uniformly collapse voids within the pretreated green compacts from each direction, thereby improving density uniformity of the pretreated green compacts. A step of filling the multiple hole portions formed in the rubber mold with the multiple pretreated green compacts can be performed using, for example, a method of fitting the multiple pretreated green compacts into the hole portions while rolling the multiple pretreated green compacts on the rubber mold. In such a case, as the pretreated green compacts roll on the rubber mold, the pretreated green compacts rub against and wear the surface of the rubber mold, or the multiple pretreated green compacts collide with one another and thus become damaged, which is problematic. In particular, regarding a large and hence heavy pretreated green compact having a band-shaped portion, corner portions of the band-shaped portion may become worn or crushed. Furthermore, if multiple pretreated green compacts each having a band-shaped portion collide with one another, significant damage may occur.

To perform a CIP process on a larger number of pretreated green compacts for improving productivity, it is desirable to set the size (i.e., diameter) of an opening portion of each hole portion to be close to the size (i.e., diameter) of each pretreated green compact. However, for a rubber mold in which the size of an opening portion of each hole portion is close to the size of each pretreated green compact, a considerable time would be required to fill all of the hole portions with the pretreated green compacts, which is problematic.

In addition, pretreated green compacts often have low strength. Thus, friction of the pretreated green compacts against the surface of the rubber mold or contact between multiple pretreated green compacts leads to the occurrence of defects, such as partial chipping or cracking of the pretreated green compacts. Defects in the pretreated green compacts are carried over to the resulting sintered compacts to be produced after a CIP process. For example, if a defective sintered compact is machined into a bearing ball, the resulting bearing ball has low reliability.

The present invention solves the foregoing problems, and provides a method for inserting ceramic green compacts, a method for producing CIP green compacts, a method for producing sintered ceramic compacts, and a method for producing a ceramic ball material each capable of reducing defects that occur in pretreated green compacts.

### MEANS FOR SOLVING THE PROBLEMS

A method for inserting ceramic green compacts into multiple hole portions formed in a CIP rubber mold according to an embodiment includes an insertion step. The ceramic green compacts are multiple pretreated green compacts before being subjected to a CIP process each having a maximum diameter of 5.0 mm or greater. The insertion step inserts the multiple pretreated green compacts respectively into the multiple hole portions using suction-based transport.

### BRIEF DESCRIPTION OF THE DRAWINGS

[FIG. 1] FIG. 1 is an external view illustrating an example of a ceramic ball material produced using die press molding, for describing a method for inserting ceramic green compacts according to an embodiment.
[FIG. 2] FIG. 2 is a cross-sectional view illustrating an example of die press molding, for describing the method for inserting ceramic green compacts according to the embodiment.
[FIG. 3] FIG. 3 is a perspective view illustrating an example of a rubber mold stacked product, for describing the method for inserting ceramic green compacts according to the embodiment.
[FIG. 4] FIG. 4 is a cross-sectional view illustrating an example of a rubber mold stacked product filled with pretreated green compacts, for describing the method for inserting ceramic green compacts according to the embodiment.
[FIG. 5] FIG. 5 is a top view illustrating an aspect of a rubber mold stacked product, for describing the method for inserting ceramic green compacts according to the embodiment.
[FIG. 6] FIG. 6 is a cross-sectional view for describing a first step of the method for inserting ceramic green compacts according to the embodiment.
[FIG. 7] FIG. 7 is a cross-sectional view for describing a second step of the method for inserting ceramic green compacts according to the embodiment.
[FIG. 8] FIG. 8 is a cross-sectional view for describing a third step of the method for inserting ceramic green compacts according to the embodiment.
[FIG. 9] FIG. 9 is a cross-sectional view for describing a fourth step of the method for inserting ceramic green compacts according to the embodiment.
[FIG. 10] FIG. 10 is a cross-sectional view for describing a fifth step of the method for inserting ceramic green compacts according to the embodiment.
[FIG. 11] FIG. 11 is a cross-sectional view for describing a sixth step of the method for inserting ceramic green compacts according to the embodiment.

### DESCRIPTION OF EMBODIMENTS

Hereinafter, an embodiment of a method for inserting ceramic green compacts, a method for producing CIP green compacts, a method for producing sintered ceramic compacts, and a method for producing a ceramic ball material will be described in detail with reference to the drawings.

In the method for inserting green compacts according to the embodiment, each rubber mold of a rubber mold stacked product has multiple hole portions to be filled with multiple green compacts.

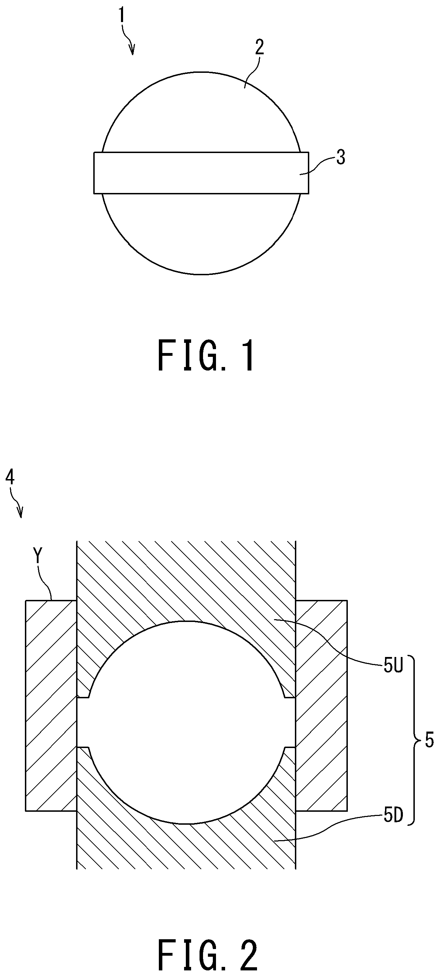

FIG. 1 illustrates a ceramic ball material, such as a bearing ball material, obtained by sintering a green compact formed through press molding. In FIG. 1, reference numeral 1 denotes a ceramic ball material, reference numeral 2 denotes a spherical portion of the ceramic ball material 1, and reference numeral 3 denotes a band-shaped portion of the ceramic ball material 1. FIG. 2 illustrates a press die for forming a pretreated green compact, which is not sintered yet, for the ceramic ball material 1. In FIG. 2, reference numeral 4 denotes a press die, reference numeral 5 denotes a punch portion, reference numeral 5U denotes an upper punch of the punch portion 5, reference numeral 5D denotes a lower punch of the punch portion 5, and reference sign Y denotes a die. A band-shaped portion of a green compact, formed in a space between a tip portion of the upper punch 5U, a tip portion of the lower punch 5D, and the die Y, corresponds to the band-shaped portion 3 of the ceramic ball material 1.

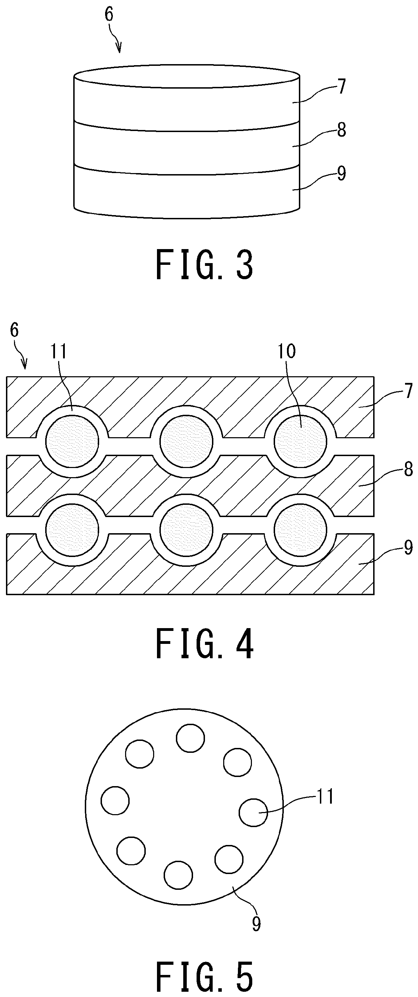

FIG. 3 is a perspective view illustrating an example of a rubber mold stacked product formed by stacking three rubber molds. In FIG. 3, reference numeral 6 denotes the rubber mold stacked product, reference numeral 7 denotes an upper rubber mold, reference numeral 8 denotes a middle rubber mold, and reference numeral 9 denotes a lower rubber mold. The rubber mold stacked product 6 is not limited to the three-layer configuration illustrated in FIG. 3. For example, the rubber mold stacked product 6 may have two layers including the upper rubber mold 7 and the lower rubber mold 9 without the middle rubber mold 8, or may have four or more layers including two or more middle rubber molds 8.

FIG. 4 is a cross-sectional view illustrating an example of a rubber mold stacked product formed by stacking three rubber molds. In FIG. 4, reference numeral 6 denotes the rubber mold stacked product, reference numerals 7 to 9 denote the rubber molds, reference numeral 10 denotes pretreated green compacts, which are not sintered yet, for the ceramic ball materials 1 (illustrated in FIG. 1), and reference numeral 11 denotes hole portions. Herein, the rubber mold stacked product 6 for processing the pretreated green compacts 10 is a forming mold used to perform CIP forming. Each of the rubber molds 7 to 9 of the rubber mold stacked product 6 has a plate shape. The "plate shape" herein refers to the shape of a rubber mold having a certain thickness (i.e., height). A bottom surface of the upper rubber mold 7, a top surface of the lower rubber mold 9, and opposite top and bottom surfaces of the middle rubber mold 8 are each provided with multiple hemispherical hole portions 11. The multiple hole portions 11 are arranged at positions where the opposite hemispherical hole portions 11 can form spherical shapes together.

Multiple pretreated green compacts 10 are poured onto the lower rubber mold 9 so that the multiple pretreated green compacts 10 are fitted into the multiple hole portions 11 formed in the top surface of the lower rubber mold 9. Then, the middle rubber mold 8 is stacked on the lower rubber mold 9. Next, multiple pretreated green compacts 10 are poured onto the stacked middle rubber mold 8 so that the multiple pretreated green compacts 10 are fitted into the multiple hole portions 11 formed in the top surface of the middle rubber mold 8. Then, the upper rubber mold 7 is stacked on the middle rubber mold 8. Alternatively, the middle rubber mold 8, which has pretreated green compacts 10 fitted therein in advance, is stacked on the lower rubber mold 9, and then, the upper rubber mold 7 is stacked on the middle rubber mold 8. Accordingly, the multiple pretreated green compacts 10 are sealed between the rubber molds 7 to 9. By applying isotropic hydraulic pressure to the stacked rubber molds 7 to 9, it is possible to uniformly collapse voids within the pretreated green compacts 10 from each direction, thereby improving density uniformity of the pretreated green compacts 10, that is, reducing density non-uniformity.

As illustrated in FIG. 4, each of the multiple hole portions 11 has a substantially hemispherical shape. In addition, a CIP green compact, which is a green compact obtained by performing a CIP process on the pretreated green compact 10, need not have a spherical shape, and may have a cylindrical (i.e., pellet) shape. When the CIP green compact has a cylindrical shape, the hole portion 11 does not have a substantially hemispherical shape, but has a substantially cylindrical shape with its opening portion having a substantially circular shape. Further, the CIP green compact may be based not only on the pretreated green compact 10 obtained using die molding but also on the pretreated green compact 10 obtained using tumbling granulation, for example. The CIP green compact based on the pretreated green compact 10 obtained using tumbling granulation, for example, may have a shape without a band-shaped portion. Therefore, the pretreated green compact 10 may or may not have a band-shaped portion. It is more preferable to perform a CIP process on the pretreated green compact 10 obtained using a method, such as die molding or tumbling granulation, among the foregoing methods. In addition, the pretreated green compact 10 may have the band-shaped portion 3 as illustrated in FIG. 1, or may not have such a band-shaped portion 3. Although each of the rubber molds 7 to 9 should be designed considering the shapes of the hole portions 11, the shape of a side surface of each rubber mold is not limited to a particular shape. Note that each of the pretreated green compacts 10, the CIP green compacts, and degreased green compacts (described later) are examples of green compacts.

The rubber mold stacked product 6 is used to perform a CIP process on the pretreated green compacts 10. Examples of the CIP process include methods called WET-CIP and DRY-CIP. WET-CIP is a method that includes sealing powder or the pretreated green compacts 10 within a bag or a similar container having low deformation resistance and sufficient strength, and applying hydraulic pressure thereto while preventing contact between the powder or the pretreated green compacts 10 and a liquid. Meanwhile, a method called DRY-CIP is a pressurization method performed with the rubber mold stacked product 6, using a base for supporting the rubber mold stacked product 6 at the bottom of the rubber mold stacked product 6. Since such methods apply hydraulic pressure, it is possible to perform forming with non-directional, isotropic pressure. With the isotropic pressure, it is possible to suppress non-uniform density distribution in the pretreated green compacts 10. CIP is also sometimes referred to as cold isostatic pressing or rubber pressing. The use of the rubber mold stacked product 6 yields more favorable results when DRY-CIP is adopted, in particular, of the two methods.

As illustrated in FIG. 3, each of the rubber molds 7 to 9 of the rubber mold stacked product 6 preferably has a plate shape, for example, the shape of a substantially perfectly circular plate. The shape of a substantially perfectly circular plate refers to a right circular cylindrical or elliptical cylindrical shape with a relatively low height between opposite top and bottom surfaces. Note that each of the plate-shaped rubber molds 7 to 9 is not limited to a circular plate shape, and may have a polygonal shape, for example. When each of the rubber molds 7 to 9 has a polygonal shape, it preferably has the shape of a polygon with five or more sides. In addition, each of the rubber molds 7 to 9 may be provided with engagement portions for connection to adjacent rubber molds above and below. When each of the rubber molds 7 to 9 has a circular plate shape, it is easier to perform positioning when stacking the multiple rubber molds 7 to 9 in a vertical direction. In particular, when each of the rubber molds 7 to 9 has the shape of a perfectly circular plate, it is possible to eliminate any directionality of the vertically adjacent rubber molds 7 to 9, which makes it easier to stack the rubber molds 7 to 9. This can also reduce the likelihood of collapse of the rubber mold stacked product 6, which includes the multiple stacked rubber molds 7 to 9, during transport. The number of stacked rubber molds of the rubber mold stacked product 6 is preferably two or more. Stacking multiple rubber molds can increase the number of pretreated green compacts 10 to be subjected to a CIP process at a time with the rubber mold stacked product 6.

The thickness (i.e., height) of a single layer, that is, each of the rubber molds 7 to 9 is preferably 5 mm to 30 mm. If the rubber molds 7 to 9 are too thin, the risk of their deformation will increase. If the rubber molds 7 to 9 deform, they may fail to engage properly with each other. In such a case, the rubber molds 7 to 9 may collapse during the stacking of the rubber molds 7 to 9 and during the transport of the rubber mold stacked product 6. In addition, even if the rubber molds 7 to 9 do not collapse, they may lose their balance, potentially causing problems during the transport of the rubber mold stacked product 6. Further, if the rubber molds 7 to 9 deform, it may become difficult to apply uniform pressure to the pretreated green compacts 10 during a CIP process.

The number of stacked rubber molds of the rubber mold stacked product 6 is not limited to a particular number (FIGS. 3 and 4 each illustrate an example in which three rubber molds are stacked), but the number is preferably 50 or less. If the number of stacked rubber molds is too large, the stacked rubber molds may collapse while the rubber mold stacked product 6 is transported into a CIP processing apparatus or while the rubber mold stacked product 6 is taken out of the CIP processing apparatus. In addition, even if the stacked rubber molds do not collapse, lateral sway of the rubber mold stacked product 6 that occurs during transport may accelerate degradation of the engagement portions. Therefore, the number of rubber molds of the rubber mold stacked product 6 is preferably 2 to 30. More preferably, the number of rubber molds is 2 to 20. Considering mass productivity and the like, the number of rubber molds is further preferably 3 to 10. This specification illustrates an example in which the number of rubber molds is three.

When the three rubber molds 7 to 9 are stacked, it is preferable that the heights of the rubber molds 7 to 9 have a minimal error. For example, it is preferable that the heights of the rubber molds 7 to 9 have an error of not greater than 10%. This is because a large error in the heights of the rubber molds 7 to 9 increases the likelihood of collapse of the rubber molds 7 to 9 during the transport of the rubber mold stacked product 6. It is also preferable that the stacked surface areas of the rubber molds 7 to 9 have a minimal error. This is because a large error in the stacked surface areas of the rubber molds 7 to 9 may make it difficult to apply uniform pressure during a CIP process.

If necessary, the side surfaces of the rubber molds 7 to 9, the top surface of the rubber mold 7, and the bottom surface of the rubber mold 9 (i.e., non-hole surfaces without the hole portions 11) may be provided with recess portions or protruding portions for purposes such as marking or weight reduction. That is, the shape of each of the non-hole surfaces of the rubber molds 7 to 9 is not limited to a particular shape.

In addition, it is preferable that the Shore hardness Hs of each of the rubber molds 7 to 9 be in the range of 30 to 50 inclusive. As described above, isotropic pressure is applied to the rubber molds 7 to 9 filled with the pretreated green compacts 10. If the Shore hardness Hs is in the range of 30 to 50 inclusive, the deformation amount can be made uniform. Therefore, such a Shore hardness can ensure deformation ability that allows for uniform contact between the surfaces of the pretreated green compacts 10 and the rubber molds 7 to 9. In addition, the durability of the rubber molds 7 to 9 also becomes excellent. Note that the Shore hardness Hs is measured in compliance with JIS-Z-2246 (2000).

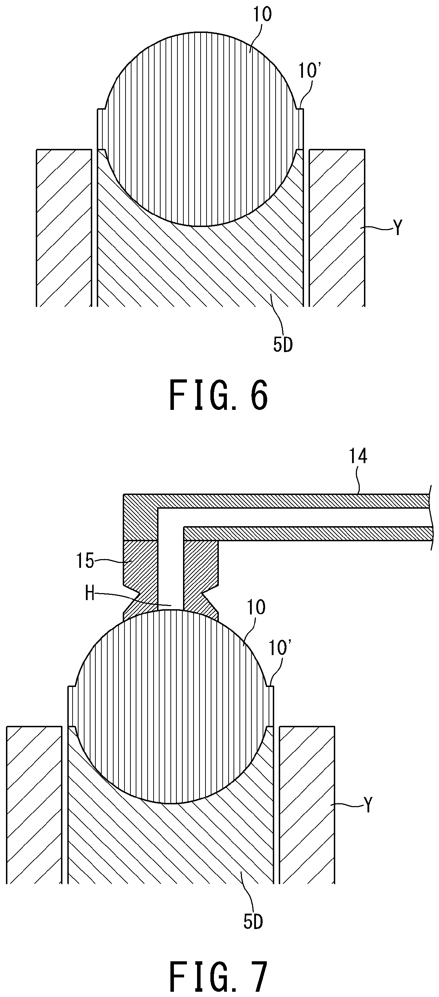

The method for inserting the pretreated green compacts 10 includes an insertion step of respectively inserting the multiple pretreated green compacts 10 into the multiple hole portions 11 using suction-based transport. By respectively inserting the multiple pretreated green compacts 10 into the multiple hole portions 11 using suction-based transport, it is possible to eliminate friction between the pretreated green compacts 10 and the rubber mold, and avoid collision between the pretreated green compacts 10. The suction-based transport involves picking up the pretreated green compacts 10 one at a time by suction from a press molding machine or from a tray containing aligned pretreated green compacts 10, using a suction arm 14 (illustrated in FIG. 7), and moving the pretreated green compact 10, which is held by suction, to the rubber mold, and then releasing (i.e., stopping) the suction. Note that it is possible to sequentially move the pretreated green compacts 10 one at a time using a single suction arm 14 to move all of the pretreated green compacts 10, or move k (where k is an integer of 2 or more) pretreated green compacts 10 at a time using k suction arms 14 to move all of the pretreated green compacts 10.

FIG. 5 is a top view illustrating an example of the top surface of the lower rubber mold 9. The top and bottom surfaces of the middle rubber mold 8 are also similar to FIG. 5. In addition, the bottom surface of the upper rubber mold 7 is also similar to FIG. 5.

FIGS. 6 to 11 are views for describing a method for inserting the pretreated green compacts 10 into each of the rubber molds 8 and 9 having the hole portions 11 formed in their top surface (e.g., the lower rubber mold 9). FIGS. 6 to 11 are cross-sectional views each taken along a vertical plane including the center of a pretreated green compact 10. Referring to FIGS. 6 to 11, a method for inserting the pretreated green compacts 10 into the lower rubber mold 9 of the two rubber molds 8 and 9 will be described, for example. FIG. 6 illustrates a first step before the pretreated green compact 10 is discharged from the lower punch 5D of the press die. An upper surface of the lower punch 5D has reached an upper surface of the die Y, and a band-shaped portion 10' of the pretreated green compact 10 is located above the die Y.

FIG. 7 illustrates a second step in which a suction pad 15 attached to the suction arm 14 adheres to the spherical portion of the pretreated green compact 10 by suction. The central portion of the tip of the suction pad 15 has a hole H extending therethrough to a through-hole aligned with the axial direction of the suction arm 14. As the central portion of the tip of the suction pad 15 further suctions the pretreated green compact 10 through the hole H while being in contact with the pretreated green compact 10, the central portion of the tip of the suction pad 15 adheres to the pretreated green compact 10 by suction.

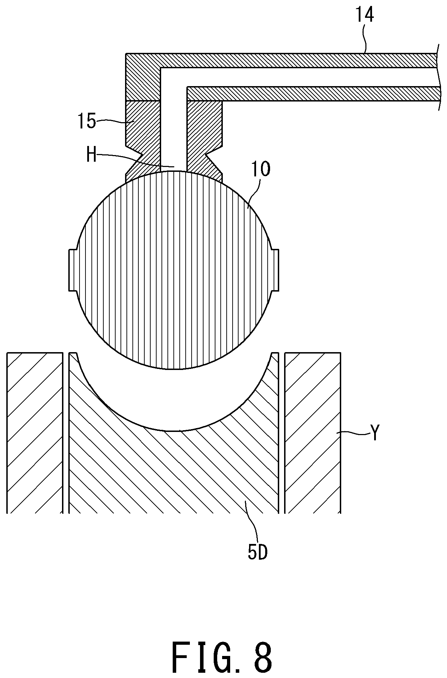

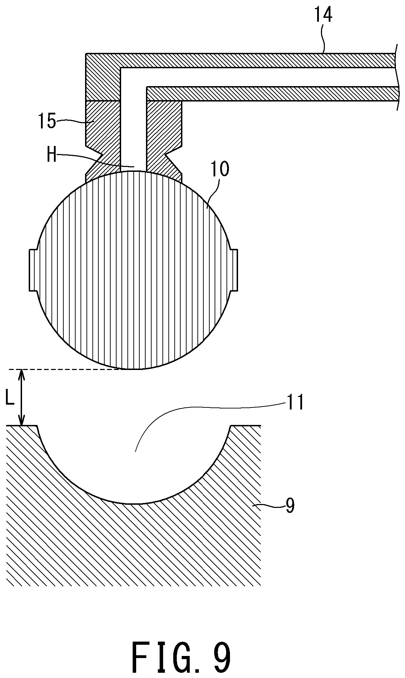

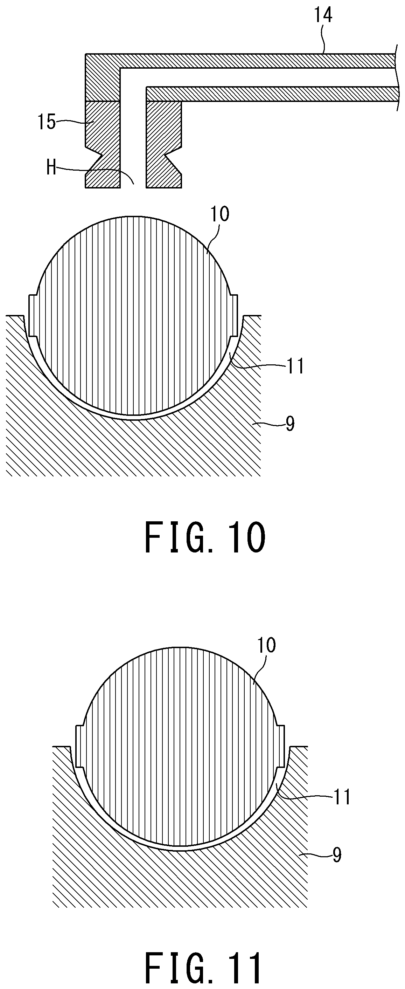

FIG. 8 illustrates a third step in which the suction arm 14 moves upward while holding the pretreated green compact 10 by suction to lift the pretreated green compact 10. FIG. 9 illustrates a fourth step in which the suction arm 14 has moved to a position above the lower rubber mold 9 while holding the pretreated green compact 10 by suction. In the fourth step, at least the suction arm 14 is moved so that the moved pretreated green compact 10 is located substantially directly above a hole portion 11 of the lower rubber mold 9. Herein, it is possible to move only the suction arm 14 to each of the multiple hole portions 11 while keeping the lower rubber mold 9 fixed in place, or rotate the lower rubber mold 9 about its vertical axis while moving the suction arm 14 to a position above the circumference of a region where the multiple hole portions 11 are arranged so that the moved pretreated green compact 10 is located substantially directly above a hole portion 11 of the lower rubber mold 9. FIG. 10 illustrates a fifth step in which the suction is released after the suction arm 14 has descended, and the pretreated green compact 10 has fallen into the hole portion 11 of the lower rubber mold 9. FIG. 11 illustrates a sixth step after the suction arm 14 has retracted.

In FIG. 7, to enhance adhesion to the pretreated green compact 10, the suction pad 15 is preferably formed of an elastic material, such as stretchable rubber. When an elastic material is used for the suction pad 15, its hardness is preferably 70° or less. If the hardness exceeds 70°, the suction pad 15 may not deform while adhering to the pretreated green compact 10 by suction, resulting in poor adhesion to the pretreated green compact 10 and potentially failing to properly adhere to the pretreated green compact 10 by suction. The suction pad 15 in the suction state illustrated in FIGS. 7 to 9 deforms at its tip portion to conform to the shape of the pretreated green compact 10, compared to the suction pad 15 in the non-adhesion state illustrated in FIG. 10. The hardness measurement is performed in accordance with JIS K 6253-3 (2012). The shape of a suction surface of the suction pad 15 is preferably circular, corresponding to the spherical portion of the pretreated green compact 10. Suction pressure applied during suction is set to 50 to 100 kPa, and the size ϕ of the suction surface of the suction pad 15 is set to 3 mm to 30 mm. The suction pressure and the size of the suction surface are changed according to the diameter of the pretreated green compact 10. That is, when the diameter of the pretreated green compact 10 is small, the suction pressure and the size of the suction surface are set small. Conversely, when the diameter of the pretreated green compact 10 is large, the suction pressure and the size of the suction surface are set large.

In FIG. 10, the pretreated green compact 10 has fallen into the hole portion 11 of the lower rubber mold 9 from the state illustrated in FIG. 9. At this time, the drop distance L (illustrated in FIG. 9) of the pretreated green compact 10 is preferably set to 50 mm or less. The drop distance L refers to the height of a lower end of the pretreated green compact 10 before dropping, measured relative to the top surface plane of the rubber mold 8 or 9. This is because if the drop distance L exceeds 50 mm, the pretreated green compact 10 may be damaged due to the drop impact. Therefore, the drop distance L is preferably set to 30 mm or less, and the drop distance L is more preferably set to 15 mm or less.

In the method for inserting the pretreated green compacts 10 into the lower rubber mold 9, the maximum diameter of the pretreated green compacts 10 is 5.0 mm or greater.

When each pretreated green compact 10 is formed through press molding by applying pressure thereto from above and below, the applied pressure is set low to obtain the desired shape at a low density. Then, during the following CIP step, isotropic pressure is applied to increase the density, thereby obtaining a uniform CIP green compact. There may be a case where the following method is used, for example: a method for inserting the pretreated green compacts 10 into the hole portions 11 by placing the pretreated green compacts 10 on the lower rubber mold 9 and rotating the lower rubber mold 9. In such a case, the pretreated green compacts 10 having a maximum diameter of less than 5.0 mm are light, and thus, even if such pretreated green compacts 10 roll on the lower rubber mold 9, they hardly rub against and wear the surface of the lower rubber mold 9. Furthermore, even if such pretreated green compacts 10 collide with one another, they are hardly damaged.

However, the pretreated green compacts 10 having a maximum diameter of 5.0 mm or greater are heavy. Thus, if such pretreated green compacts 10 roll on the lower rubber mold 9, they are likely to rub against and wear the surface of the lower rubber mold 9. Further, such pretreated green compacts 10 are likely to collide with one another, and thus become damaged. At this time, corner portions of the band-shaped portions 10' (illustrated in FIG. 6), formed in a protruding manner from the spherical portions, may become worn or crushed. The weight of each pretreated green compact 10 increases in proportion to its diameter. Accordingly, processing pretreated green compacts 10 with a larger diameter can increase yield, and can obtain greater advantageous effects of the insertion method illustrated in FIGS. 6 to 11. Therefore, the maximum diameter of the pretreated green compacts 10 is more preferably set to 7.0 mm or greater, and further preferably, 10.0 mm or greater.

Each pretreated green compact 10 has a shape such as a spherical, cylindrical, or plate shape. Among these, the pretreated green compact 10 preferably has a spherical shape to produce the spherical ceramic ball material 1 as illustrated in FIG. 1. The spherical shape may be a shape including the spherical portion 2 and the band-shaped portion 3, such as the ceramic ball material 1 with a band-shaped portion (illustrated in FIG. 1), or a shape including only a spherical portion, such as a ceramic ball material without a band-shaped portion (not illustrated). As described above, performing a CIP process can apply isotropic pressure to the pretreated green compacts 10. In particular, when each pretreated green compact 10 has a spherical shape, the effect of applying isotropic pressure can be obtained more easily.

In the method for inserting the pretreated green compacts 10, the total amount of ceramic powder in each pretreated green compact 10 is 80 mass% or more, and the amount of a binder is 3 mass% to 20 mass%.

Each pretreated green compact 10 preferably contains, as its main component (i.e., 50 mass% or more), one or more of aluminum oxide (i.e., alumina), silicon nitride, boron nitride, zirconium oxide (i.e., zirconia), silicon carbide, and aluminum nitride that are included in the ceramic powder. Further, each pretreated green compact 10 more preferably contains 85 mass% or more of one or more of aluminum oxide, silicon nitride, boron nitride, zirconium oxide, silicon carbide, and aluminum nitride. The pretreated green compact 10 undergoes CIP, followed by a degreasing step if necessary, and then becomes a sintered ceramic compact (hereinafter also referred to simply as a "sintered compact") through a sintering step. If the pretreated green compact 10 has a ball shape, the resulting sintered ceramic compact also has a ball shape. The ball-shaped sintered ceramic compact is also referred to as the ceramic ball material 1, and is used as a bearing ball. A bearing ball is produced by polishing the ceramic ball material 1. In particular, a sintered compact of silicon nitride has excellent wear resistance, and thus can be effectively used as a bearing ball.

The phrase "the ceramic powder of pretreated green compact 10 contains 85 mass% or more of one of aluminum oxide, silicon nitride, boron nitride, and zirconium oxide" means that the resulting sintered ceramic compact also contains 85 mass% or more of one of aluminum oxide, silicon nitride, boron nitride, and zirconium oxide. In addition to such a main component(s), 15 mass% or less of sintering agent may also be contained.

For example, the Vickers hardness of a sintered compact of aluminum oxide or a sintered compact of zirconium oxide is in the range of 1200 to 1700 inclusive. Meanwhile, the toughness value of such a sintered compact is in the range of 3 MPa·m^{1/2} to 6 MPa·m^{1/2} inclusive, and thus is low. In contrast, the Vickers hardness of a sintered compact of silicon nitride is in the range of 1400 to 1800 inclusive, and thus is high. In addition, the toughness value of such a sintered compact is in the range of 5 MPa·m^{1/2} to 10 MPa·m^{1/2} inclusive, and thus is high. Since the sintered compact of silicon nitride achieves both a high toughness value and high Vickers hardness, it exhibits excellent wear resistance. This is because the sintered compact of silicon nitride has a microstructure primarily composed of β-silicon nitride crystal grains. The β-silicon nitride crystal grains have an elongated shape. Such elongated crystal grains are intertwined with each other in a complex manner so that a high toughness value is achieved.

The amount of the binder in the mixed powder of each pretreated green compact 10 is 3 mass% to 20 mass%. The binder serves to bond the ceramic powder particles together. During the degreasing and sintering stage for the pretreated green compact 10, the binder decomposes and is removed by heating. If the amount of the binder is less than 3 mass%, the effect of bonding the ceramic powder particles together is not obtained, resulting in reduced strength of the pretreated green compact 10. Therefore, the pretreated green compact 10 may be damaged even during suction-based transport. Meanwhile, if the amount of the binder exceeds 20 mass%, the strength of the pretreated green compact 10 increases, but voids remain after the removal of the binder, potentially reducing the strength of the sintered compact. Therefore, the amount of the binder is set to 3 mass% to 20 mass%, preferably, 5 mass% to 15 mass%, and more preferably, 7 mass% to 12 mass%.

Polishing is required to form a spherical sintered ceramic compact into a bearing ball. A spherical sintered ceramic compact obtained through a sintering step is referred to as the ceramic ball material 1 (illustrated in FIG. 1). In the case of FIG. 1, the obtained ceramic ball material 1 is a sphere with the band-shaped portion 3 originating from the band-shaped portion of the pretreated green compact 10. There may also be a case where the obtained ceramic ball material 1 is a sphere without the band-shaped portion 3 originating from the band-shaped portion of the pretreated green compact 10, though not illustrated. A sphere obtained by polishing the ceramic ball material 1 is referred to as a bearing ball.

As described above, the rubber mold stacked product 6 is suitable for applying isotropic pressure to the pretreated green compacts 10. In particular, the rubber mold stacked product 6 is suitable for performing a CIP process on the pretreated green compacts 10. Bearing balls come in various diameters in the range of 1.0 mm to 50.0 mm inclusive. The rubber mold stacked product 6 can be applied to the pretreated green compacts 10 of various sizes.

Next, a method for producing the ceramic ball materials 1 will be described. The method for producing the ceramic ball materials 1 according to the embodiment is a method that involves the use of the foregoing method for inserting the pretreated green compacts 10.

In addition, a method for producing CIP green compacts includes, in addition to a step of forming the rubber mold stacked product 6 by filling the multiple hole portions 11 formed in each of the rubber molds 8 and 9 with the multiple pretreated green compacts 10 and then stacking the rubber mold 8 on the rubber mold 9, a step of performing a CIP process on the multiple pretreated green compacts 10 filling the hole portions 11.

Further, a method for producing sintered ceramic compacts includes, in addition to the step of forming the rubber mold stacked product 6 by filling the multiple hole portions 11 formed in each of the rubber molds 8 and 9 with the multiple pretreated green compacts 10 and then stacking the rubber mold 8 on the rubber mold 9, and the step of performing a CIP process on the multiple pretreated green compacts 10 filling the hole portions 11, a step of sintering the CIP green compacts to obtain sintered ceramic compacts. Note that the sintered ceramic compacts each having a ball shape correspond to the ceramic ball materials 1.

The method for producing sintered ceramic compacts, for example, the ceramic ball materials 1 need only have the foregoing configuration. However, a method for improving yield (i.e., the ratio of non-defective products to the total number of products produced) will be described hereinafter.

First, a method for preparing the pretreated green compacts 10 will be described using silicon nitride. When each pretreated green compact 10 contains, as its main component (i.e., 50 mass% or more), one or more of aluminum oxide, boron nitride, and zirconium oxide, the description should be read by replacing the main component with silicon nitride. In examples of the present invention, uniaxial pressing is used as an example of a method for obtaining the pretreated green compacts 10. However, the molding method is not limited thereto. For example, a tumbling granulation method may be used as the molding method.

First, appropriate amounts of sintering agent powder, additives, a solvent, and a binder, for example, are added to and mixed with silicon nitride powder as a raw material. Then, the mixture is subjected to disintegration and then to granulation using a spray dryer. Through such a step, granulated powder of the raw material powder was prepared. When the total amount of the silicon nitride powder and the sintering agent powder is taken as 100 mass%, the amount of the silicon nitride powder is preferably set to 85 mass% or more. The additives are, for example, a plasticizer. The solvent is water or an organic solvent. Examples of the organic solvent include alcohol, ketone, and benzene. The binder is an organic material. When the total amount of the silicon nitride powder and the sintering agent powder is taken as 100 parts by mass, the amount of the binder to be added is preferably set to 3 to 20 parts by mass. Adjusting the amount of the binder can control shape retention ability and density uniformity of the pretreated green compacts 10 during the uniaxial pressing. In addition, preparing the granulated powder can uniformly mix the silicon nitride powder and sintering agent powder.

Next, uniaxial pressing is performed on the granulated powder. Examples of the uniaxial pressing include a die molding method that involves the use of the upper punch 5U and the lower punch 5D illustrated in FIG. 2. The shape of each pretreated green compact 10 to be obtained can be controlled based on the shape of the die. When each of inner sides of the upper punch 5U and the lower punch 5D has a hemispherical shape, a spherical pretreated green compact 10 can be obtained. Alternatively, when each of the inner sides of the upper punch 5U and the lower punch 5D has a substantially cylindrical shape, a pellet-like (i.e., substantially cylindrical) pretreated green compact 10 can be obtained. The pretreated green compact 10 obtained through the uniaxial pressing corresponds to the pre-sintered ceramic ball material 1 having a spherical shape including the spherical portion 2 and the band-shaped portion 3 illustrated in FIG. 1.

Next, a step of performing a CIP process on the pretreated green compacts 10 is performed. To perform the CIP process, the rubber mold stacked product 6 is used. The multiple hole portions 11 formed in each of the rubber molds 8 and 9 of the rubber mold stacked product 6, for example, the lower rubber mold 9 are filled with the multiple pretreated green compacts 10. At this time, providing the lower rubber mold 9 with a large number of hole portions 11 can increase the number of pretreated green compacts 10 to be processed. In addition, when the lower rubber mold 9 is provided with the multiple hole portions 11, it is preferable to perform a CIP process after all of the hole portions 11 are filled with the pretreated green compacts 10. This is because, although it is possible to fill only some of the hole portions 11 with the pretreated green compacts 10, more uniform isotropic pressure can be applied when all of the hole portions 11 are filled with the pretreated green compacts 10.

The pretreated green compacts 10 are formed using granulated powder. Thus, applying isotropic pressure to the pretreated green compacts 10 through a CIP process can press the granulated powder, thereby suppressing density variation. That is, using granulated powder for forming the pretreated green compacts 10 can suppress density variation by uniformly dispersing the silicon nitride powder and the sintering agent powder. If the pressure applied to the pretreated green compacts 10 during the CIP process is not uniform, the granulated powder will remain unpressed. Such unpressed portions become a cause of density variation.

The pressure applied during the CIP forming is preferably higher than the pressure applied during the uniaxial pressing. Further, the conditions of the CIP process are preferably set such that pressure in the range of 30 MPa to 300 MPa inclusive is applied. Applying pressure in such a range can reduce density variation among the CIP green compacts after the CIP process. This is particularly effective when the rubber molds 7 to 9 of the rubber mold stacked product 6, which have a Shore hardness Hs of 30 to 50, are used. If the pressure applied during the CIP process is less than 30 MPa, the pressure may be insufficient. Further, if the pressure is high, for example, greater than 300 MPa, the durability of the rubber molds 7 to 9 may decrease.

The CIP green compacts can have reduced density variation. Therefore, the shrinkage ratio of the CIP green compacts during a sintering step described below can be controlled. Improving the CIP green compacts leads to improvements of the sintered ceramic compacts to be obtained. The method for producing the ceramic ball materials 1 using the rubber mold stacked product 6 can reduce the defect occurrence rate of the CIP green compacts.

Next, a degreasing step of degreasing the CIP green compacts is performed. The degreasing step is a step of heating the CIP green compacts to the decomposition temperature of organic components, such as the binder, or higher to remove the organic components. The degreasing step may be performed in a nitrogen atmosphere or an air atmosphere. Through the degreasing step, degreased green compacts can be obtained as the green compacts.

Next, a sintering step of sintering the degreased green compacts is performed. The sintering step is preferably performed at 1700°C to 2000°C. In addition, the sintering step is preferably performed in a nitrogen atmosphere. In addition, pressure applied during the sintering is preferably set in the range of the atmospheric pressure to 300 MPa inclusive. Note that the atmospheric pressure is 0.10133 MPa (= 1 atm). The sintered compacts obtained through the sintering step may be subjected to a HIP (hot isostatic pressing) process. Through such a step, sintered ceramic compacts (e.g., the ceramic ball materials 1) can be obtained. The ceramic ball materials 1 correspond to sintered ceramic compacts with a theoretical density of 98% or higher.

Polishing the ceramic ball materials 1 can produce ceramic balls. A representative example of a method for polishing spheres is surface plate machining. For example, the ceramic ball materials 1 are inserted into a gap between surface plates arranged in parallel. The ceramic ball materials 1 can be polished into true spheres through a movement of the surface plates for polishing, for example. The surface roughness of bearing balls is defined by ASTM F2094. For bearing balls, a grade conforming to ASTM F2094, ISO 26602, or JIS R 1669 is adopted depending on their application. Polishing is performed to achieve a surface roughness Ra corresponding to the grade. When higher grades are adopted, mirror finishing may be performed to achieve a surface roughness Ra of 0.01 µm or less.

### (Examples 1 to 9 and Comparative Examples 1 to 6)

A sintering agent, additives, a solvent, and a binder, for example, were added to and mixed with ceramic powder as a raw material. Then, the mixture was subjected to disintegration and then to granulation using a spray dryer. As illustrated in Table 1, Examples 1 to 5 and Comparative Examples 1 and 2 correspond to the pretreated green compacts (i.e., silicon nitride green compacts) 10 containing 85 mass% or more of silicon nitride, Examples 6 and 7 and Comparative Examples 3 and 4 correspond to the pretreated green compacts (i.e., aluminum oxide green compacts) 10 containing 85 mass% or more of aluminum oxide (i.e., alumina), and Examples 8 and 9 and Comparative Examples 5 and 6 correspond to the pretreated green compacts (i.e., zirconium oxide green compacts) 10 containing 85 mass% or more of zirconium oxide (i.e., zirconia). For each case, when the total amount of the main component and the sintering agent was taken as 100 parts by mass, the amount of the binder added was set to 3 to 20 parts by mass. In Table 1, aluminum oxide is indicated as alumina, and zirconium oxide is indicated as zirconia.

Next, press molding was performed on the granulated powder. The press molding was performed through die molding using the upper punch 5U and the lower punch 5D of the press die 4 illustrated in FIG. 2. Press molding performed with the upper punch 5U and the lower punch 5D is uniaxial pressing. The die is adapted to produce a spherical pretreated green compact 10. Accordingly, the pretreated green compact 10 was fabricated. The pretreated green compact 10 used in each example corresponds to the ceramic ball material 1 having a band-shaped portion, that is, having the spherical portion 2 and the band-shaped portion 3, as illustrated in FIG. 1. However, the pretreated green compact 10 is similarly produced even if it corresponds to the ceramic ball material having no band-shaped portion and having only the spherical portion 2 (not illustrated).

The rubber molds 7 to 9 were prepared to perform a CIP process on each pretreated green compact 10. As the rubber molds 7 to 9, those having a Shore hardness Hs of 30 to 50 were used. In addition, the bottom surface of the upper rubber mold 7, the top surface of the lower rubber mold 9, and both the top and bottom surfaces of the middle rubber mold 8 are each provided with multiple hemispherical hole portions 11.

In the insertion method according to each of Examples 1 to 9, the pretreated green compacts 10 were picked up by suction from the press die 4, and were then moved to the lower rubber mold 9 through the production steps illustrated in FIGS. 6 to 11. In contrast, in the insertion method according each of Comparative Examples 1 to 6, a number of pretreated green compacts were poured onto the lower rubber mold (where the number of the pretreated green compacts is equal to 1.2 times the number of the hole portions formed in the lower rubber mold), and then, the lower rubber mold was rotated to insert the pretreated green compacts into the hole portions. In Table 1, each method for inserting pretreated green compacts is indicated by either "Suction" or "Rotation." In addition, regarding the insertion method based on the suction method according to each of Examples 1 to 9, the drop distance L of the pretreated green compacts 10 to the lower rubber mold 9 was adjusted.

Next, the middle rubber mold 8 filled with the pretreated green compacts 10 was stacked on the lower rubber mold 9 filled with the pretreated green compacts 10. Then, the upper rubber mold 7 was stacked on the middle rubber mold 8 to form the rubber mold stacked product 6. Such a rubber mold stacked product 6 was used to perform a CIP process on the multiple pretreated green compacts 10 filling the hole portions 11. As pressure applied during the CIP process, hydrostatic pressure in the range of 30 MPa to 300 MPa inclusive, higher than pressure applied during the uniaxial pressing, was applied. Through such a step, CIP green compacts were fabricated.

Next, appearance inspection was performed on the CIP green compacts as the green compacts subjected to the CIP process, using an optical microscope. The number of CIP green compacts having chipping defects was counted to determine the chipping defect rate. Table 1 illustrates the chipping defect rate.

**[Table 1]**

| | Material | Diameter of Pretreated Green Compact [mm] |
|---|---|---|
| Example 1 | Silicon Nitride | 11.0 |
| Example 2 | Silicon Nitride | 11.0 |
| Example 3 | Silicon Nitride | 11.0 |
| Example 4 | Silicon Nitride | 28.0 |
| Example 5 | Silicon Nitride | 28.0 |
| Example 6 | Aluminum Oxide | 11.0 |
| Example 7 | Aluminum Oxide | 28.0 |
| Example 8 | Zirconium Oxide | 11.0 |
| Example 9 | Zirconium Oxide | 28.0 |
| Comparative Example 1 | Silicon Nitride | 11.0 |
| Comparative Example 2 | Silicon Nitride | 28.0 |
| Comparative Example 3 | Aluminum Oxide | 11.0 |
| Comparative Example 4 | Aluminum Oxide | 28.0 |
| Comparative Example 5 | Zirconium Oxide | 11.0 |
| Comparative Example 6 | Zirconium Oxide | 28.0 |

| | Inserting Method | Drop Distance L [mm] | Chipping Defect Rate [%] |
|---|---|---|---|
| Example 1 | Suction | 25 | 0.9 |
| Example 2 | Suction | 5 | 0.0 |
| Example 3 | Suction | 50 | 1.8 |
| Example 4 | Suction | 5 | 0.0 |
| Example 5 | Suction | 50 | 1.0 |
| Example 6 | Suction | 5 | 0.0 |
| Example 7 | Suction | 50 | 1.0 |
| Example 8 | Suction | 5 | 0.0 |
| Example 9 | Suction | 50 | 2.1 |
| Comparative Example 1 | Rotation | - | 8.0 |
| Comparative Example 2 | Rotation | - | 9.4 |
| Comparative Example 3 | Rotation | - | 7.1 |
| Comparative Example 4 | Rotation | - | 10.4 |
| Comparative Example 5 | Rotation | - | 8.0 |
| Comparative Example 6 | Rotation | - | 9.4 |

Next, degreasing and sintering steps were performed on the green compacts other than those with chipping defects. For silicon nitride, the sintering step was performed at 1800°C in a nitrogen atmosphere under atmospheric pressure. For aluminum oxide and zirconium oxide, the sintering step was performed at 1500°C in an air atmosphere under atmospheric pressure. After that, for silicon nitride, a HIP process was performed at a temperature of 1700°C to 1900°C in a nitrogen atmosphere at a pressure of 50 MPa to 200 MPa. For aluminum oxide and zirconium oxide, a HIP process was performed at a temperature of 1300°C to 1500°C in an air atmosphere at a pressure of 50 MPa to 200 MPa.

Appearance inspection was performed on the unpolished sintered compacts, using the ceramic ball materials 1 produced from the pretreated green compacts 10 of each of Examples 1 to 14 and Comparative Examples 1 to 3.

Examples 1 to 3, 6, and 8 as well as Comparative Examples 1, 3, and 5 illustrated in Table 1 correspond to the ceramic ball materials for ceramic balls to have a size of 11/32 inches (8.73 mm) after being polished. Examples 4 to 5, 7, and 9 as well as Comparative Examples 2, 4, and 6 correspond to the ceramic ball materials for ceramic balls with a size of 7/8 inches (22.225 mm). All of such ceramic balls can be used as bearing balls.

As is clear from Table 1 above, the chipping defect rate of the insertion method according to each example was found to be low. In contrast, the chipping defect rate of the insertion method according to each comparative example was found to be higher than that of each example. This is because, in the insertion method according to each example, the pretreated green compacts 10 were inserted by suction, thereby preventing collision between the pretreated green compacts 10 and eliminating friction between the pretreated green compacts 10 and each of the rubber molds 8 and 9. In contrast, in the insertion method according to each comparative example, the rubber mold holding pretreated green compacts was rotated to insert the pretreated green compacts therein, resulting in collision between the pretreated green compacts and friction between the pretreated green compacts and the rubber mold, and thus resulting in a higher number of chipping defects. Furthermore, among the insertion methods according to the examples, it was found that a shorter drop distance L of the pretreated green compacts 10 results in a lower chipping defect rate compared to a longer drop distance L. That is because, as the drop distance L of the pretreated green compacts 10 is shorter, the drop impact on the pretreated green compacts 10 becomes smaller, resulting in a lower chipping defect rate.

According to the embodiment described above, it is possible to provide a method for inserting the pretreated green compacts 10, a method for producing CIP green compacts, a method for producing sintered compacts, and a method for producing a ceramic ball material each capable of reducing defects that occur in the pretreated green compacts 10. In addition, according to the embodiment, it is possible to improve the yield of the step of inserting the pretreated green compacts 10.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A method for inserting ceramic green compacts into multiple hole portions formed in a CIP rubber mold, the ceramic green compacts being multiple pretreated green compacts before being subjected to a CIP process each having a maximum diameter of 5.0 mm or greater, the method comprising:
an insertion step of inserting the multiple pretreated green compacts respectively into the multiple hole portions using suction-based transport.

2. The method for inserting ceramic green compacts according to claim 1, wherein the pretreated green compacts are formed from mixed powder of ceramic powder and a binder, a total amount of the ceramic powder being 80 mass% or more, and an amount of the binder being 3 mass% to 20 mass%.

3. The method for inserting ceramic green compacts according to claim 1 or 2, wherein the pretreated green compacts are green compacts of silicon nitride.

4. A method for producing CIP green compacts, comprising:
the insertion step according to claim 1 or 2; and
a CIP step of performing a CIP process on, among the multiple pretreated green compacts, pretreated green compacts each of which fills each of some or all of the multiple hole portions, thereby producing multiple CIP green compacts.

5. A method for producing sintered ceramic compacts, comprising:
the insertion step and the CIP step according to claim 4; and
a sintering step of sintering the multiple CIP green compacts to produce multiple sintered ceramic compacts.

6. A method for producing a ceramic ball material, comprising:
the insertion step, the CIP step, and the sintering step according to claim 5, wherein
each of the multiple sintered ceramic compacts has a shape including a spherical portion and a band-shaped portion, or a shape including only a spherical portion.
